# EUROPEAN PATENT APPLICATION

(11) **EP 4 563 278 A1**
(43) Date of publication of application: **04.06.2025**
(21) Application number: 23845727.9
(22) Date of filing: 28.07.2023
(51) Int. Cl.: B23K 35/14, B23K 35/28, B23K 35/363

(54) **ACTIVE SOLDER PASTE COMPOSITION FOR CLADDING CERAMIC WITH COPPER, METHOD FOR CLADDING CERAMIC WITH COPPER, AND COPPER-CLAD CERAMIC**

(30) Priority: 29.07.2022 CN 202210911044
(71) Applicant: BYD Company Limited, Shenzhen, Guangdong 518118 (CN)
(72) Inventor: ZHOU, Wei, Shenzhen, Guangdong 518118 (CN); XU, Qiang, Shenzhen, Guangdong 518118 (CN); LIU, Weiwei, Shenzhen, Guangdong 518118 (CN); WU, Lei, Shenzhen, Guangdong 518118 (CN)
(74) Representative: Mathys & Squire
(86) International application number: PCT/CN2023/110034
(87) International publication number: WO 2024/022523

(57) **Abstract**

An active solder paste composition for cladding ceramic with copper, a method for cladding ceramic with copper, and copper-clad ceramic. The active solder paste composition comprises, on the basis of the total weight of the active solder paste composition, 1 to 20 wt% of a first metal powder and 75 to 94 wt% of a second metal powder, with the balance being a flux, wherein the first metal powder contains titanium hydride and the second metal powder contains a copper-phosphorus-silver alloy. The active solder paste composition can not only decrease the silver content, but can also reduce the welding temperature; moreover, the connection strength of Ti and Cu is further enhanced, and the welding strength is improved, such that the material is less prone to segregation.

## Description

### CROSS-REFERENCE TO RELATED APPLICATIONS

The present disclosure claims priority to Chinese Patent Application No. 202210911044.4, filed on July 29, 2022 and entitled "Active solder paste composition for cladding ceramic with copper, method for cladding ceramic with copper, and copper-clad ceramic", which is incorporated herein by reference in its entirety.

### FIELD

The present disclosure relates to the field of technologies for cladding ceramic with copper, and specifically, to an active solder paste composition for cladding ceramic with copper, a method for cladding ceramic with copper, and copper-clad ceramic.

### BACKGROUND

Common technologies for cladding ceramic with copper include direct bonded copper (DBC) technology and active metal brazing (AMB) technology. A copper-clad ceramic substrate produced by the DBC technology has low reliability and the technology is only suitable for use with alumina ceramics. An AMB substrate has high reliability due to the use of a small amount of active solder to react with the ceramic to realize the connection between copper and ceramics. The traditional active solder is an AgCuTi alloy solder. However, silver-copper-titanium alloy solder has numerous defects. On the one hand, the melting process of the silver-copper-titanium ternary alloy is complex and uncontrollable, in which Ti has the highest melting point, and the solubility of Ti in Ag or Cu is very low. Consequently, various intermetallic compounds tend to be formed, which are prone to aggregation and segregation. On the other hand, Ti is susceptible to oxidization, causing a decreased activity during the brazing and thus affecting the welding performance. Moreover, to ensure a relatively low welding temperature of the silver-copper-titanium ternary alloy solder, the Ag content in the alloy is generally between 50 to 90 wt%, leading to a high solder cost of this alloy system.

### SUMMARY

An object of the present disclosure is to provide an active solder paste composition for cladding ceramic with copper, a method for cladding ceramic with copper, and copper-clad ceramic. The active solder paste composition can not only decrease the silver content, but can also reduce the welding temperature. Moreover, the connection strength of Ti and Cu is further enhanced, and the welding strength is improved, such that the material is less prone to segregation.

To achieve the above object, a first aspect of the present disclosure provides an active solder paste composition for cladding ceramic with copper. The active solder paste composition includes, on the basis of the total weight of the active solder paste composition, 1 to 20 wt% of a first metal powder and 75 to 94 wt% of a second metal powder, with the balance being a flux. The first metal powder contains titanium hydride and the second metal powder contains a copper-phosphorus-silver alloy.

In some embodiments, on the basis of the total weight of the second metal powder, the content of copper is 80 to 90 wt% and preferably 85 to 90 wt%; the content of phosphorus is 4 to 10 wt%, and preferably 6 to 8 wt%; and the content of silver is 3 to 10 wt%, and preferably 4 to 6 wt%.

In some embodiments, on the basis of the total weight of the first metal powder, the content of titanium is 90 wt% or higher, and preferably 93 to 96 wt%.

In some embodiments, on the basis of the total weight of the first metal powder and the second metal powder, the content of the first metal powder is 1 to 20 wt%, and the content of the second metal powder is 80 to 99 wt%.

In some embodiments, on the basis of the total weight of the active solder paste composition, the total weight of the first metal powder and the second metal powder is 75 to 95 wt%.

In some embodiments, the first metal powder has an absolute particle size of 30 µm or less and a median particle size D50 of 1 to 6 µm; and the second metal powder has an absolute particle size of 80 µm or less and a median particle size D50 of 10 to 30 µm.

In some embodiments, the flux contains a solvent, a dispersant, a binder and an anti-settling agent. The solvent is one or more selected from dibutyl phthalate, terpineol, butyl carbitol acetate, tributyl citrate, and soft phospholipid; the dispersant is one or more selected from stearic acid, polyacrylamide and polyethylene glycol; the binder is one or more selected from ethyl cellulose, polyvinyl butyral and polyvinyl alcohol; and the anti-settling agent is one or more selected from hydrogenated castor oil, polyamide wax, polyglycol ether and fatty amine polyoxyethylene ether.

In some embodiments, on the basis of the total weight of the flux, the content of the solvent is 60 to 90 wt%, the content of the dispersant is 0.5 to 10 wt%, the content of the binder is 1 to 20 wt%, and the content of the anti-settling agent is 0.5 to 10 wt%.

A second aspect of the present disclosure provides a method for cladding ceramic with copper. The method includes the following steps. S1: The active solder paste composition provided in the first aspect of the present disclosure is coated on a surface of a ceramic substrate and dried, to obtain a ceramic substrate cladded with the active solder paste composition on the surface. S2: A copper material to be welded is brought into contact with the ceramic substrate and heat welded.

In some embodiments, the areal density of the active solder paste composition on the ceramic substrate cladded with the active solder paste composition is 35 to 500 g/m².

In some embodiments, the heat welding is carried out by programmed heating. The programmed heating is as follows. The temperature is raised to a first target temperature of 300 to 400°C at a vacuum level of 0.01 to 0.1 Pa and a heating rate of 10 to 15°C/min; then the temperature is raised to a second target temperature of 500 to 600°C at a vacuum level of 0.001 to 0.009 Pa and a heating rate of 5 to 10°C/min, and held for 15 to 60 min; next, the temperature is raised to a third target temperature of 800 to 950°C at a vacuum level of 0.01 to 0.05 Pa and a heating rate of 3 to 6°C/min, and held for 10 to 60 min; and subsequently, the temperature is reduced to a fourth target temperature of 550 to 700°C at a vacuum level of 0.001 to 0.05 Pa and a cooling rate of 1 to 5°C/min, followed by naturally cooling.

In some embodiments, the ceramic substrate is selected from silicon nitride ceramics, alumina ceramics or aluminum nitride ceramics. The thickness of the ceramic substrate is 0.2 to 1 mm, and the thickness of the copper material to be welded is 0.2 to 1 mm, and preferably 0.25 to 0.65 mm.

A third aspect of the present disclosure provides a copper-clad ceramic prepared by the method described in the second aspect of the present disclosure.

According to the above technical solutions, the present disclosure provides an active solder paste composition for cladding ceramic with copper, a method for cladding ceramic with copper, and copper-clad ceramic. The active solder paste composition includes a first metal powder and a second metal powder. The first metal powder contains titanium hydride and the second metal powder contains a copper-phosphorus-silver alloy. TiH₂ is highly chemically stable, does not react with air and water, and decomposable to release hydrogen when heated to 400°C. The produced H₂ can reduce the oxide layer on the surface of the silver-copper alloy powder. Fresh active elemental Ti is provided for welding, to promote the wetting of the solder to the ceramics, and reduce the welding defects. By adding a small amount of elemental phosphorus with low melting point to the silver-copper alloy powder, the silver content is reduced, the solder cost is lowered, the welding temperature is decreased to have a liquidus temperature of 650 to 850°C, and the connection strength between Ti and Cu is increased, to increase the welding strength, so that the material is less prone to segregation.

Other features and advantages of the present disclosure will be described in detail in the detailed description section that follows.

### BRIEF DESCRIPTION OF THE DRAWINGS

The accompanying drawings are intended to provide a further understanding of the present disclosure and constitute a part of the specification, and serve to explain the present disclosure together with the following detailed description, but do not constitute a limitation on the present disclosure. In the accompanying drawings:
FIG. 1 is an ultrasonic scanning diagram of a copper-clad ceramic plate 1 prepared in Example 1 of the present disclosure.
FIG. 2 is an ultrasonic scanning diagram of a comparative copper-clad ceramic plate 1 prepared in Comparative Example 1 of the present disclosure.

### DETAILED DESCRIPTION

Specific implementations of the present disclosure are described in detail below with reference to the accompanying drawings. It should be understood that the specific implementations described herein are merely used to describe and explain the present disclosure, but are not intended to limit the present invention.

A first aspect of the present disclosure provides an active solder paste composition for cladding ceramic with copper. The active solder paste composition includes, on the basis of the total weight of the active solder paste composition, 1 to 20 wt% of a first metal powder and 75 to 94 wt% of a second metal powder, with the balance being a flux. The first metal powder contains titanium hydride and the second metal powder contains a copper-phosphorus-silver alloy.

The active solder paste composition for cladding ceramic with copper according to the present disclosure includes a first metal powder and a second metal powder. The first metal powder contains titanium hydride and the second metal powder contains a copper-phosphorus-silver alloy. The active solder paste composition has a low coast. Titanium hydride synergizes with the copper-phosphorus-silver alloy, to effectively increase the welding strength, and the welded face is flat and dense. Specifically, TiH₂ in the active solder paste composition according to the present disclosure is highly chemically stable, does not react with air and water, and decomposable to release hydrogen when heated to 400°C. The produced H₂ can reduce the oxide layer on the surface of the copper-phosphorus-silver alloy. Fresh active elemental Ti is provided for welding, to promote the wetting of the solder to the ceramics, and reduce the welding defects, so that the welded face is flat and dense. Elemental phosphorus contained in the copper-phosphorus-silver alloy can reduce the silver content in the solder and thus reduce the solder cost. Moreover, elemental phosphorus has a low melting point, by which the melting point of the alloy is reduced to have a liquidus temperature of 650 to 850°C, thus reducing the welding temperature. In addition, elemental phosphorus also increases the connection strength between Ti and Cu, to increase the welding strength, so that the material is less prone to segregation.

In a specific embodiment of the present disclosure, the first metal powder is titanium hydride, and the second metal powder is a copper-phosphorus-silver alloy.

In an embodiment of the present disclosure, on the basis of the total weight of the second metal powder, the content of copper is 80 to 90 wt%, the content of phosphorus is 4 to 10 wt%, and the content of silver is 3 to 10 wt%. In the above embodiments, the copper-phosphorus-silver alloy according to the present disclosure contains an appropriate amount of low-melting-point elemental phosphorus. Elemental phosphorus can not only reduce the silver content in the silver-copper alloy and reduce the solder cost, but also ensure that the copper-phosphorus-silver alloy has an appropriate liquidus temperature to retain a relatively low welding temperature, and also ensure the reactive connection between Ti and Cu, so that the material is less prone to segregation and the welding strength is increased. Moreover, the oxygen content in the second metal powder is low, which can prevent Cu from being oxidized.

In an embodiment of the present disclosure, on the basis of the total weight of the second metal powder, the content of copper is 85 to 90 wt%; the content of phosphorus is 6 to 8 wt%; and the content of silver is 4 to 6 wt%. In the above embodiment, the welding performance of the active solder paste composition is further improved, to further improve the welding quality.

In an embodiment of the present disclosure, on the basis of the total weight of the first metal powder, the content of titanium is 90 wt% or higher. In the above embodiment, by the use of the first metal powder with a high titanium content, the activity of the active solder paste composition can be improved, which promotes the wetting of the solder to the ceramics, thereby reducing the welding defects.

In an embodiment of the present disclosure, on the basis of the total weight of the first metal powder, the content of titanium is 93 to 96 wt%. In the above embodiment, the activity of the active solder paste composition is improved, which promotes the wetting of the solder to ceramics, thereby reducing welding defects; and appropriate H₂ is ensured to be produced, to reduce the oxide layer on the surface of the copper-phosphorus-silver alloy, thus further ensuring the welding effect.

In an embodiment of the present disclosure, on the basis of the total weight of the first metal powder and the second metal powder, the content of the first metal powder is 1 to 20 wt%, and the content of the second metal powder is 80 to 99 wt%. In the above embodiment, by the use of the first metal powder and the second metal powder at the above ratio, the synergism between them is enhanced, so as to further improve the welding strength and the flatness and density of the welded face.

In an embodiment of the present disclosure, on the basis of the total weight of the active solder paste composition, the total weight content of the first metal powder and the second metal powder is 75 to 95 wt%. In the above embodiment, the contents of the first metal powder and the second metal powder in the active solder paste composition are appropriate, which promotes the full exertion of the welding activity of the active solder paste composition, promotes the full contact of the metal powder with the flux, to improve the dispersibility and solubility of the metal powder, thereby further improving the welding strength and the flatness and density of the welded face.

In an embodiment of the present disclosure, on the basis of the total weight of the active solder paste composition, the total content of the first metal powder and the second metal powder is 80 to 90 wt%. In the above embodiment, the welding performance of the active solder paste composition is further improved, to further improve the welding quality.

In an embodiment of the present disclosure, the first metal powder has an absolute particle size of 30 µm or less and a median particle size D50 of 1 to 6 µm; and the second metal powder has an absolute particle size of 80 µm or less and a median particle size D50 of 10 to 30 µm. The absolute particle size refers to the actual particle size of the powder particles, which is detected by PSA- laser particle size analyzer. The median particle size D50 refers to a corresponding particle size when the cumulative particle size distribution percentage of a sample reaches 50%, which can be detected by laser diffraction. For example, the median particle size D50 of the first metal powder is 6 µm, which means that the number of particles with a particle size of greater than 6 µm in the first metal powder accounts for 50% of the total number of particles in the first metal powder, and the number of particles with a particle size of less than 6 µm also accounts for 50% of the total number of particles in the first metal powder. In the above embodiment, by the use of the first metal powder and the second metal powder with the above particle size, the metal particles can be fully melted and the oxidation of the active metal powder is ameliorated, to further improve the welding strength and the flatness and density of the welded face.

In an embodiment of the present disclosure, the median particle size D50 of the first metal powder is 1 to 3 µm, and the median particle diameter D50 of the second metal powder is 10 to 25 µm. In the above embodiment, the welding performance of the active solder paste composition is further improved, to further improve the welding quality.

According to the present disclosure, the solvent, dispersant, binder and anti-settling agent contained in the flux can be those conventionally used by those skilled in the art. In an embodiment of the present disclosure, the solvent contained in the flux is one or more selected from dibutyl phthalate, terpineol, butyl carbitol acetate, tributyl citrate, and soft phospholipid; the dispersant is one or more selected from stearic acid, polyacrylamide and polyethylene glycol; the binder is one or more selected from ethyl cellulose, polyvinyl butyral (PVB) and polyvinyl alcohol; and the anti-settling agent is one or more selected from hydrogenated castor oil, polyamide wax, polyglycol ether and fatty amine polyoxyethylene ether.

In an embodiment of the present disclosure, on the basis of the total weight of the flux, the content of the solvent is 60 to 90 wt%, the content of the dispersant is 0.5 to 10 wt%, the content of the binder is 1 to 20 wt%, and the content of the anti-settling agent is 0.5 to 10 wt%. In the above embodiment, by the use of the flux with the above composition, the solubility of the metal powder is improved, to improve the welding strength and the flatness and density of the welded face.

In an embodiment of the present disclosure, on the basis of the total weight of the flux, the content of the solvent is 70 to 90 wt%, the content of the dispersant is 1 to 3 wt%, the content of the binder is 5 to 15 wt%, and the content of the anti-settling agent is 1 to 5 wt%. In the above embodiment, by the use of the flux with the above composition, the solubility of the metal powder can be further improved, thereby further improving the welding strength and the flatness and density of the welded face.

A second aspect of the present disclosure provides a method for cladding ceramic with copper. The method includes the following steps. S1: The active solder paste composition provided in the first aspect of the present disclosure is coated on a surface of a ceramic substrate and dried, to obtain a ceramic substrate cladded with the active solder paste composition on the surface. S2: A copper material to welded is brought into contact with the ceramic substrate and heat welded. By method according to the present disclosure, a copper-clad ceramic having a high welding strength and a welded face of excellent flatness and density.

In an embodiment of the present disclosure, the method includes the following steps: S1: An active solder paste composition is evenly coated on an upper surface and a lower surface of a ceramic substrate by screen printing and dried, to obtain a ceramic substrate with the active solder paste composition coated on the surfaces; and S2: A copper material to be weld is attached to the upper surface and the lower surface of the ceramic substrate and heated welded in a vacuum brazing furnace.

According to the present disclosure, the drying conditions are not particularly limited in the present disclosure, as long as the metal in the active solder paste composition can be uniformly attached to the surface of the ceramic substrate without falling off. In a specific embodiment, the drying conditions include a temperature of 50 to 100°C and a period of time of 10 to 60 min.

In an embodiment of the present disclosure, the areal density of the active solder paste composition on the ceramic substrate cladded with the active solder paste composition on the surface is 35 to 500 g/m², and preferably 200 to 500 g/m². The areal density refers to the weight of the active solder paste composition contained on one unit area of the ceramic substrate. In the above embodiment, by the use of the active solder paste composition having the above areal density, the ceramic and the copper material to be welded can be closely connected together, and good printing performance is exhibited, to increase the welding stability.

According to the present disclosure, the method of heat welding is well known to those skilled in the art. In an embodiment of the present disclosure, the heat welding is carried out by programmed heating. The programmed heating is as follows. The temperature is raised to a first target temperature of 300 to 400°C at a vacuum level of 0.01 to 0.1 Pa and a heating rate of 10 to 15°C/min; then the temperature is raised to a second target temperature of 500 to 600°C at a vacuum level of 0.001 to 0.009 Pa and a heating rate of 5 to 10°C/min, and held for 15 to 60 min; next, the temperature is raised to a third target temperature of 800 to 950°C at a vacuum level of 0.01 to 0.05 Pa and a heating rate of 3 to 6°C/min, and held for 10 to 60 min; and subsequently, the temperature is reduced to a fourth target temperature of 550 to 700°C at a vacuum level of 0.001 to 0.05 Pa and a cooling rate of 1 to 5°C/min, followed by naturally cooling. In the above embodiment, a copper-clad ceramic with an excellent welding strength and a welded face of excellent flatness and density can be prepared by the programmed heating procedure.

The material of the ceramic substrate is not particularly limited in the present disclosure, and can be those well known to those skilled in the art. In an embodiment of the present disclosure, the ceramic substrate is selected from silicon nitride ceramics, alumina ceramics or aluminum nitride ceramics, for example, silicon nitride ceramics. Such ceramic substrates have stable performance and excellent strength and heat resistance, and the copper-clad ceramics prepared therewith have excellent flatness and strength.

In an embodiment of the present disclosure, the thickness of the ceramic substrate varies in a wide range. Specifically, it may be 0.2 to 1 mm. The thickness of the ceramic substrate within the above range is appropriate. At this time, the ceramic substrate has stable performance and excellent strength and heat resistance, and the copper-clad ceramics prepared therewith have excellent flatness and strength.

In the present disclosure, the copper material to be welded can be, for example, a copper sheet, and a copper foil, etc.; and the thickness of the copper material to be soldered also varies in a wide range, and specifically, it can be 0.2 to 1 mm. The thickness of the copper material to be welded in the above range is appropriate, which is conducive to improving the welding stability, so as to prepare a copper-clad ceramic with a good welding strength and a welded face of good flatness and density.

In the above embodiment, by the use of a ceramic substrate and a copper material to be welded having appropriate thickness, a copper-clad ceramic with a good welding strength and a welded face of good flatness and density can be prepared. The copper-clad ceramic has good electrical and thermal conductivity and excellent air tightness.

In an embodiment of the present disclosure, the thickness of the copper material to be welded can be 0.25 to 0.65 mm. The thickness of the copper material to be welded within the above range is preferred. In this case, a copper-clad ceramic with a better welding strength and a welded face of better flatness and density can be prepared. The copper-clad ceramic has even better electrical and thermal conductivity and air tightness.

A third aspect of the present disclosure provides a copper-clad ceramic prepared by the method described in the second aspect of the present disclosure. The copper-clad ceramic provided in the present disclosure has a high peeling strength and a dense welded face without voids, thus having excellent performance.

The present disclosure will be further described by the following examples, but the present disclosure is not limited in any way.

In the following examples and comparative examples, the raw materials used are all commercial products unless otherwise specified.

The particle size is determined by laser diffraction using PSA-laser particle size analyzer.

### Example 1

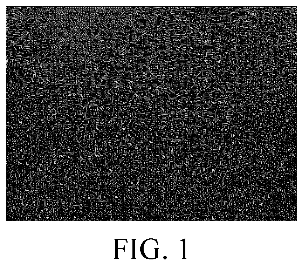

(1) The active solder paste composition used included, on the basis of the total weight of the active solder paste composition, 5 wt% of a first metal powder, 80 wt% of a second metal powder, and 15 wt% of a flux. The first metal powder was TiH₂ (having an absolute particle size of 30 µm or less, D50 of 3 µm, and a Ti content of a 96 wt%), and the second metal powder was a copper-phosphorus-silver alloy powder (having an absolute particle size of 80 µm or less and D50 of 30 µm).
   On the basis of the total weight of the copper-phosphorus-silver alloy powder, the content of copper in the copper-phosphorus-silver alloy powder was 88 wt%, the content of phosphorus was 7 wt%, and the content of silver was 5 wt%. The flux included terpineol, stearic acid, ethyl cellulose, and hydrogenated castor oil. On the basis of the total weight of the flux, the content of terpineol was 90 wt%, the content of stearic acid was 2 wt%, the content of ethyl cellulose is 5 wt%, and the content of hydrogenated castor oil was 3 wt%.
(2) A silicon nitride ceramic with a thickness of 0.32 mm was used as a ceramic substrate. The active solder paste composition was printed on the upper and lower surfaces of the ceramic substrate by screen printing. The screen size was 300 meshes, and the areal density of the printed active solder paste composition was 200 g/m². The printed material was dried at 80°C for 20 min, to obtain a ceramic sheet. A copper sheet having a thickness of 0.3 mm was respectively attached to an upper and a lower surface of the dried ceramic sheet, and then fed to a vacuum brazing furnace for heat welding after assembly.
(3) After the member was fed to the furnace, the furnace was evacuated, and heat welding was carried out by programmed heating. The programmed heating was as follows. The temperature was raised to a first target temperature of 400°C at a vacuum level of less than 0.1 Pa and a heating rate of 10°C/min; then the temperature was raised to a second target temperature of 600°C at a vacuum level of 0.009 Pa and a heating rate of 5°C/min and held for 30 min; next the temperature was raised to a third target temperature of 850°C at a vacuum level of 0.05 Pa and a heating rate of 3°C/min, and held for 30 min; and subsequently, the temperature was reduced to a fourth target temperature of 600°C at a vacuum level of 0.05 Pa and a cooling rate of 3°C/min, followed by naturally cooling with the furnace without controlling the cooling rate, to obtain a copper-clad ceramic plate 1. The copper-clad ceramic plate 1 removed from the furnace was ultrasonically scanned. Because the copper-clad ceramic plate 1 was welded densely and there was no voids, the ultrasonic scanning showed a black background, as shown in FIG. 1.

### Example 2

A copper-clad ceramic plate was prepared following the method in Example 1, except that on the basis of the total weight of the active solder paste composition, the used active solder paste composition included 4 wt% of TiH₂, 82 wt% of a copper-phosphorus-silver alloy powder, and 14 wt% of a flux. A copper-clad ceramic plate 2 was obtained.

### Example 3

A copper-clad ceramic plate was prepared following the method in Example 1, except that on the basis of the total weight of the active solder paste composition, the used active solder paste composition contained 3 wt% of TiH₂, 84 wt% of a copper-phosphorus-silver alloy powder, and 13 wt% of a flux. A copper-clad ceramic plate 3 was obtained.

### Example 4

A copper-clad ceramic plate was prepared following the method in Example 1, except that the ceramic substrate was an alumina ceramic. A copper-clad ceramic plate 4 was prepared.

### Example 5

A copper-clad ceramic plate was prepared following the method in Example 1, except that the D50 of the second metal powder was 20 µm. A copper-clad ceramic plate 5 was prepared.

### Example 6

A copper-clad ceramic plate was prepared following the method in Example 1, except that the D50 of the second metal powder was 40 µm. A copper-clad ceramic plate 6 was prepared.

### Example 7

A copper-clad ceramic plate was prepared following the method in Example 1, except that the D50 of the first metal powder was 10 µm. A copper-clad ceramic plate 7 was prepared.

### Example 8

A copper-clad ceramic plate was prepared following the method in Example 1, except that on the basis of the total weight of the active solder paste composition, the used active solder paste composition included 3 wt% of a first metal powder, 94 wt% of a second metal powder, and 3 wt% of a flux. A copper-clad ceramic plate 8 was obtained.

### Example 9

A copper-clad ceramic plate was prepared following the method in Example 1, except that on the basis of the active solder paste composition, the used active solder paste composition included 20 wt% of a first metal powder, 75 wt% of a second metal powder, and 5 wt% of a flux. A copper-clad ceramic plate 9 was obtained.

### Example 10

A copper-clad ceramic plate was prepared following the method in Example 1, except that on the basis of the total weight of TiH₂, the content of titanium was 80 wt%. A copper-clad ceramic plate 10 was obtained.

### Comparative Example 1

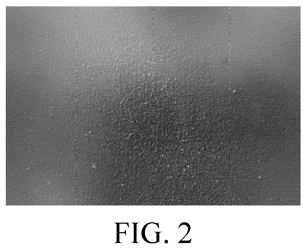

A copper-clad ceramic plate was prepared following the method in Example 1, except that the active solder paste used was a commercially available silver-copper-titanium ternary alloy solder paste (with a titanium content of 4 wt%), product type: AgCuTi5. A comparative copper-clad ceramic plate 1 was obtained. The comparative copper-clad ceramic plate 1 was ultrasonically scanned, and found to have suspected presence of non-melted or segregated particles. The background was not pure black, as shown in FIG. 2.

### Comparative Example 2

A copper-clad ceramic plate was prepared following the method in Example 1, except that on the basis of the total weight of the active solder paste composition, the used active solder paste composition included 15 wt% of TiH₂, 70 wt% of a copper-phosphorus-silver alloy powder, and 15 wt% of a flux. A comparative copper-clad ceramic plate 2 was obtained.

### Comparative Example 3

A copper-clad ceramic plate was prepared following the method in Example 1, except that on the basis of the total weight of the active solder paste composition, the used active solder paste composition contained 0.5 wt% of TiH₂, 96 wt% of a copper-phosphorus-silver alloy powder, and 3.5 wt% of a flux. A comparative copper-clad ceramic plate 3 was obtained.

### Comparative Example 4

A copper-clad ceramic plate was prepared following the method in Example 1, except that the first metal powder was a pure titanium powder. A comparative copper-clad ceramic plate 4 was prepared.

### Comparative Example 5

A copper-clad ceramic plate was prepared following the method in Example 1, except that the second metal powder was a copper-silver alloy powder; and on the basis of the total weight of the copper-silver alloy powder, the content of copper was 95 wt% and the content of silver was 5 wt%. A comparative copper-clad ceramic plate 5 was obtained.

### Test examples

The copper-clad ceramic plates obtained in the examples and comparative examples were tested for the peeling strength and ultrasonically scanned. The equipment for peeling strength test was a universal test machine, the test software was QCTech-A3, the peeling speed was 50 mm/min, and peeling length is greater than 25 mm. The test method of ultrasonic scanning was C-scanning, and the test instrument was an ultrasonic microscope. The test results are shown in Table 1.

**Table 1**

| | Peeling strength, N/mm | Ultrasonic scanning test |
|---|---|---|
| Example 1 | >15 | Welded densely without voids |
| Example 2 | >15 | Welded densely without voids |
| Example 3 | >15 | Welded densely without voids |
| Example 4 | >20, peeling occurs inside the ceramic | Welded densely without voids |
| Example 5 | >20 | Welded densely without voids |
| Example 6 | 10 to 15 | Welded densely without voids |
| Example 7 | 10 to 15 | Welded densely without voids |
| Example 8 | 10 to 15 | Welded densely without voids |
| Example 9 | >15 | Welded densely without voids |
| Example 10 | 10 to 15 | Welded densely without voids |
| Comparative Example 1 | 5 to 12 | Suspected presence of non-melted or segregated particles |
| Comparative Example 2 | <5 | Suspected presence of non-melted or segregated particles |
| Comparative Example 3 | <3 | Large voids present in the welded face |
| Comparative Example 4 | 9 to 13 | A small number of voids of small size present |
| Comparative Example 5 | | Failed to weld the copper foil to the ceramic |

According to the above data, the copper-clad ceramic plates obtained by using the active solder paste composition of the present disclosure in Examples 1 to 10 has a dense welded face without voids, and has a high peeling strength. The comparative copper-clad ceramic plates obtained in Comparative Examples 1 to 5 where the method of the present disclosure is not used have suspected presence of non-melted or segregated metal particles, and have voids and weak peeling strength, so they cannot be used. Therefore, the active solder paste composition provided in Examples 1 to 10 of the present disclosure are better than those provided in Comparative Examples 1 to 5.

Preferred embodiments of the present disclosure have been described in detail above with reference to the accompanying drawings. However, the present disclosure is not limited to the specific details in the foregoing embodiments. Within the scope of the technical concept of the present disclosure, a variety of simple modifications can be made to the technical solution of the present disclosure, which fall within the protection scope of the present disclosure.

In addition, it should be noted that the various specific technical features described in the foregoing specific embodiments can be combined in any suitable manner, where there is no contradiction. To avoid unnecessary repetition, various possible combinations are not described separately in the present disclosure.

Additionally, various embodiments of the present disclosure can also be arbitrarily combined without departing from the idea of the present disclosure, and these combinations shall still be regarded as content disclosed in the present disclosure.

## Claims

1. An active solder paste composition for cladding ceramic with copper, comprising, on the basis of the total weight of the active solder paste composition, 1 to 20 wt% of a first metal powder and 75 to 94 wt% of a second metal powder, with the balance being a flux,
wherein the first metal powder comprises a titanium hydride, and the second metal powder comprises a copper-phosphorus-silver alloy.

2. The active solder paste composition according to claim 1, wherein on the basis of the total weight of the second metal powder, the content of elemental copper in the copper-phosphorus-silver alloy is 80 to 90 wt% and preferably 85 to 90 wt%;
the content of elemental phosphorus in the copper-phosphorus-silver alloy is 4 to 10 wt% and preferably 6 to 8 wt%; and
the content of elemental silver in the copper-phosphorus-silver alloy is 3 to 10 wt% and preferably 4 to 6 wt%.

3. The active solder paste composition according to claim 1 or 2, wherein on the basis of the total weight of the first metal powder, the content of elemental titanium in titanium hydride is 90 wt% or higher, and preferably 93 to 96 wt%.

4. The active solder paste composition according to any one of claims 1 to 3, wherein on the basis of the total weight of the first metal powder and the second metal powder, the content of the first metal powder is 1 to 20 wt%, and the content of the second metal powder is 80 to 99 wt%.

5. The active solder paste composition according to any one of claims 1 to 4, wherein on the basis of the total weight of the active solder paste composition, the total content of the first metal powder and the second metal powder is 75 to 95 wt%.

6. The active solder paste composition according to any one of claims 1 to 5, wherein the first metal powder has an absolute particle size of 30 µm or less and a median particle size D50 of 1 to 6 µm; and
the second metal powder has an absolute particle size of 80 µm or less and a median particle size D50 of 10 to 30 µm.

7. The active solder paste composition according to any one of claims 1 to 6, wherein the flux comprises a solvent, a dispersant, a binder, and an anti-settling agent;
the solvent is one or more selected from dibutyl phthalate, terpineol, butyl carbitol acetate, tributyl citrate, and soft phospholipid; the dispersant is one or more selected from stearic acid, polyacrylamide and polyethylene glycol; the binder is one or more selected from ethyl cellulose, polyvinyl butyral and polyvinyl alcohol; and the anti-settling agent is one or more selected from hydrogenated castor oil, polyamide wax, polyglycol ether and fatty amine polyoxyethylene ether.

8. The active solder paste composition according to claim 7, wherein on the basis of the total weight of the flux, the content of the solvent is 60 to 90 wt%, the content of the dispersant is 0.5 to 10 wt%, the content of the binder is 1 to 20 wt%, and the content of the anti-settling agent is 0.5 to 10 wt%.

9. A method for cladding ceramic with copper, comprising:
S1: applying the active solder paste composition according to any one of claims 1 to 8 onto a surface of a ceramic substrate and drying, to obtain a ceramic substrate cladded with the active solder paste composition on the surface; and
S2: bringing a copper material to be welded into contact with the ceramic substrate cladded with the active solder paste composition on the surface and heat welding, to obtain a copper-clad ceramic.

10. The method according to claim 9, wherein the areal density of the active solder paste composition on the ceramic substrate cladded with the active solder paste composition is 35 to 500 g/m².

11. The method according to claim 9 or 10, wherein the heat welding is carried out by programmed heating, and the programmed heating comprises:
raising the temperature to a first target temperature of 300 to 400°C at a vacuum level of 0.01 to 0.1 Pa and a heating rate of 10 to 15°C/min;
raising the temperature to a second target temperature of 500 to 600°C at a vacuum level of 0.001 to 0.009 Pa and a heating rate of 5 to 10°C/min, and holding at this temperature for 15 to 60 min;
raising the temperature to a third target temperature of 800 to 950°C at a vacuum level of 0.01 to 0.05 Pa and a heating rate of 3 to 6°C/min, and holding at this temperature for 10 to 60 min; and
reducing the temperature to a fourth target temperature of 550 to 700°C at a vacuum level of 0.001 to 0.05Pa and a cooling rate of 1 to 5°C/min, and then naturally cooling.

12. The method according to any one of claims 9 to 11, wherein the ceramic substrate is selected from silicon nitride ceramics, aluminum oxide ceramics or aluminum nitride ceramics.

13. The method according to any one of claims 9 to 12, wherein
the thickness of the ceramic substrate is 0.2 to 1 mm; and
the thickness of the copper material to be welded is 0.2 to 1mm and preferably 0.25 to 0.65 mm.

14. A copper-clad ceramic, prepared with the solder paste composition according to any one of claims 1 to 8 or by the method according to any one of claims 9 to 13.
